# EUROPÄISCHE PATENTANMELDUNG

(11) **EP 4 834 562 A1**
(43) Veröffentlichungstag der Anmeldung: **04.11.2026**
(21) Anmeldenummer: 26167841.1
(22) Anmeldetag: 25.03.2026
(51) Int. Cl.: B29C 45/73, B29C 45/37, F16C 33/20

(54) **VERFAHREN ZUR HERSTELLUNG EINER KUNSTSTOFFHÜLSE, KUNSTSTOFFHÜLSE UND LAGERSYSTEM**

(30) Priorität: 16.04.2025 DE 102025114880
(71) Anmelder: Vibracoustic SE, 69469 Weinheim (DE)
(72) Erfinder: Kardoes, Hilrich, 21423 Winsen (DE); Werner, Philipp, 21339 Lüneburg (DE); Götz, Harald, 21149 Hamburg (DE)
(74) Vertreter: Patentanwälte Olbricht Buchhold Keulertz

(57) **Zusammenfassung**

Die vorgestellte Erfindung betrifft ein Verfahren (100) zur Herstellung einer Kunststoffhülse (200), wobei das Verfahren (100) umfasst:
- Aktives Aufheizen (101) der konturgebenden Werkzeugoberfläche eines Spritzgusswerkzeugs auf eine vorgegebene Einspritztemperatur, mittels einer Temperiervorrichtung,
- Einspritzen (103) von Polymerschmelze in das Werkzeug, nachdem die konturgebende Oberfläche des Werkzeugs auf die Einspritztemperatur aufgeheizt wurde,
- Aktives Abkühlen (105) der konturgebenden Werkzeugoberfläche auf eine vorgegebene Abkühltemperatur mittels einer Temperiervorrichtung,
- Auswerfen (107) der formstabilen Kunststoffhülse (200) aus dem Werkzeug,
wobei durch das Werkzeug an einer äußeren Oberfläche der Kunststoffhülse (200) ein Oberflächenprofil ausgeformt wird, das eine Anzahl Verkrallelemente (201) mit einer maximalen Flankenhöhe von 0,5 mm aufweist.

## Beschreibung

Die vorgestellte Erfindung betrifft ein Verfahren zur Herstellung einer Kunststoffhülse, eine Kunststoffhülse und ein Lagersystem gemäß den beigefügten Ansprüchen.

Elastomerlager werden in der Regel durch einen einfachen Presssitz einer Elastomerbuchse in einer metallischen Aufnahme realisiert. Werden hingegen Kunststoffaußenhülsen, insbesondere aus PA 6- oder PA66-Compounds oder Mischungen hieraus, mit metallischen Aufnahmeaugen kombiniert, so stellt der höhere thermische Ausdehnungskoeffizient des Kunststoffes eine Herausforderung dar. Bei hohen Einsatztemperaturen von bspw. größer 70 °C erhöht sich nicht nur die Überdeckung erheblich, gleichzeitig ist auch die Glasübergangstemperatur des Polyamid-Compounds überschritten, so dass ein deutliches Relaxieren zu beobachten ist. Sinkt anschließend die Einsatztemperatur auf deutlich unter 0 °C, so ist häufig insbesondere nach erfolgter Relaxation der notwendige Festsitz nicht länger gewährleistet.

Aus dem Stand der Technik sind Lagersysteme bekannt, in denen Formschlüsse zwischen einer Kunststoffaußenhülse und einer metallischen Aufnahme hergestellt werden. Wird die Aufnahme beispielsweise aus Aluminium hergestellt, so lässt sich die innere Oberfläche der Aluminiumaufnahme mit einem groben Sägezahlprofil mittels Ausspindeln versehen. Die einzelnen Zähne können sich nach dem Einpressen der Kunststoffaußenhülse in deren Kunststoff verkrallen, so dass ein Auspressen in entgegengesetzter Richtung zur Einpressrichtung mit erhöhten Auspresskräften einhergeht.

Wird hingegen ein Einsatz aus Stahl mit KTL-Beschichtung verwendet, so sind beispielsweise durch die GB 2370338 B Lösungen bekannt, bei denen endseitige Wülste nach dem Einpressen die Aufnahme umgreifen und so einen Formschluss herstellen. Diese Variante ist allerdings dadurch limitiert, dass die Wülste zunächst durch die Aufnahme hindurchgepresst werden müssen. Die Überdeckung ist dabei limitiert auf eine beschädigungsfreie Durchpressbarkeit der Wülste. Außerdem muss der Einsatz genau so weit eingepresst werden, dass der Wulst über das Ende der Aufnahme herausgedrückt wird und dort spielfrei einrastet. Da der Einsatz auf der Stirnseite, welche dem Wulst gegenüberliegt, ebenfalls eine Hinterschnittstruktur, wie einen Kragen oder auch einen Wulst, aufweist, ist die Toleranzkette von Aufnahmelänge, Kunststoffaußenhülsenlänge und die Position beider Wülste zueinander zu beachten. Ansonsten würde entweder ein ungewünschtes Spiel zwischen dem Wulst und der Aufnahme entstehen oder aber der Wulst würde nicht ausreichend weit durch die Aufnahme hindurchgeschoben werden, um überhaupt zu verrasten.

Auch sind bspw. durch die DE 10 2011 080 452 A1, die DE 10 2020 104 160 A1, die DE 10 2020 207 154 B4, die DE 10 2020 214 302 B4, die EP 2 456 995 B1 und die DE 10 2021 205 347 B3 Lösungen bekannt, bei denen Verraststrukturen wie Löcher oder Nuten in der Aufnahme selbst vorgesehen werden, in welche korrespondierende, vorstehende Raststrukturen an der Außenhülse eingreifen. Prinzipbedingt stellen Verrastungen in der Aufnahme eine vergleichbare Verrastung dar wie der Wulst hinter der Aufnahme. Allerdings sind für diese Lösung noch teils aufwändig herzustellende Aussparungen in der Aufnahme vorzusehen. Nachteilig bei dieser Lösung ist zudem die gleiche feine Abstimmung der Toleranzketten.

Vor diesem Hintergrund ist eine Aufgabe der vorgestellten Erfindung eine Möglichkeit zur Fixierung von Kunststoffhülsen aus Polyamid in KTL-beschichteten Aufnahmen ohne enge Toleranzketten bereitzustellen.

Es wird somit gemäß einem ersten Aspekt der vorgestellten Erfindung ein Verfahren zur Herstellung einer mikrostrukturierten Kunststoffhülse vorgestellt.

Das vorgestellte Verfahren umfasst das aktive Aufheizen der konturgebenden Werkzeugoberfläche eines Spritzgusswerkzeugs auf eine vorgegebene Einspritztemperatur mittels einer Temperierungsvorrichtung, das Einspritzen von Polymerschmelze, insbesondere von aufgeschmolzenem Polyamid in das Werkzeug, nachdem die Konturgebende Werkzeugoberfläche des Werkzeugs auf die Einspritztemperatur aufgeheizt wurde, das aktive Abkühlen der konturgebenden Werkzeugoberfläche auf eine vorgegebene Abkühltemperatur mittels einer Temperiervorrichtung und das Auswerfen der formstabilen Kunststoffhülse aus dem Werkzeug, wobei durch das Werkzeug an einer äußeren Oberfläche der Kunststoffhülse ein Oberflächenprofil ausgeformt wird, das eine Anzahl Verkrallelemente mit einer maximalen Flankenhöhe von 0,5 mm aufweist.

Die vorgestellte Erfindung basiert darauf, dass eine Kunststoffhülse aus Polyamid bereitgestellt wird, die beispielsweise eine Shorehärte von ca. 80 bis 85 Shore D für reines Polyamid bzw. 85 bis 90 Shore D für Polyamid mit Glasverstärkung aufweist. Entsprechend ist die Kunststoffhülse härter als eine KTL-Beschichung mit einer Shorehärte von 50 bis 80 Shore D, die in der Regel in Aufnahmen zum Aufnehmen von Kunststoffhülsen verwendet wird. Daher ermöglicht die Abstufung der Härten von Kunststoffaußenhülse und KTL-Beschichtung, dass sich an einer äußeren Oberfläche der Kunststoffhülse ausgebildete Verkrallelemente in der KTL-Beschichtung verkrallen bzw. mit dieser verrasten oder verklemmen.

Wenn die Verkrallelemente jedoch zu stark vorstehen, werden sie durch das Einpressen in die KTL-Beschichtung der Aufnahme plastisch verformt, woraufhin sie ihre Verkrallfähigkeit verlieren. Die Verkrallelemente werden daher erfindungsgemäß mit einer maximalen Flankenhöhe von 0,5 mm ausgestaltet.

Durch die Nutzung einer Temperiervorrichtung, wie bspw. eines variothermen Werkzeugs ist es möglich derart kleine Strukturen mit scharfen Kanten herzustellen. Da die Auspresskraft maßgeblich von der Anzahl der Verkrallelemente, die bspw. Zähne bzw. zahnförmig sein können, abhängt, kann durch die insgesamt kleine geometrische Ausprägung der Verkrallelemente eine große Anzahl der Verkrallelemente entlang der Oberfläche ausgebildet werden, was zu überraschend hohen Auspresskräften führt. Aufgrund der größeren Härte von Polyamid im Vergleich zu einer KTL-Beschichtung können sich die Zähne der Kunststoffhülse im KTL eingraben.

Es kann vorgesehen sein, dass das Oberflächenprofil eine Vielzahl Verkrallelemente mit einer maximalen Flankenhöhe von 70 µm, bevorzugt 30 µm aufweist.

Wenn jeweilige Verkrallelemente zu stark vorstehen, können diese durch das Einpressen in ein KTL-beschichtetes Element, wie bspw. ein Stahlauge, plastisch verformt werden, woraufhin sie ihre Verkrallfähigkeiten verlieren. Die Verkrallelemente sollten daher nicht wesentlich weiter vorstehen als die KTL-Beschichtung dick ist. Mit typischen KTL-Schichtstärken von 15 bis 35 µm ergibt sich eine bevorzugte maximale Flankenhöhe in Höhe der doppelten KTL-Dicke von 70 µm, wobei sich eine Flankenhöhe von 30 µm als besonders robust erwiesen hat.

Es kann weiterhin vorgesehen sein, dass das Polymer aus der Gruppe der Polyamide besteht, wobei das Polyamid bevorzugt Glasfasern umfasst.

Mit einer Shorehärte von ca. 80 bis 85 Shore D für reines Polyamid bzw. 85 bis 90 Shore D für Polyamid mit Glasverstärkung in Kombination mit einer Shorehärte von 50- 80 Sh D für eine KTL-Beschichtung lässt sich zwischen Kunststoffaußenhülse und KTL-Beschichtung eine ausreichende Abstufung der Härten einstellen, damit sich die Verkrallelemente in die KTL-Beschichtung eingraben.

Es kann weiterhin vorgesehen sein, dass die Einspritztemperatur der konturgebenden Werkzeugoberfläche zwischen 120 °C und 200 °C, bevorzugt zwischen 140 °C und 160 °C liegt und/oder die Abkühltemperatur zwischen 40 °C und 100 °C, bevorzugt zwischen 60 °C und 80 °C liegt.

Insbesondere eine Abkühltemperatur zwischen 60 °C und 80 °C hat sich als besonders vorteilhaft für eine minimale Prozesszeit erwiesen, da in diesem Temperaturbereich die Kunststoffhülse direkt aus dem Werkzeug entnommen und weiterverarbeitet werden kann.

Es kann weiterhin vorgesehen sein, dass das Werkzeug eine äußere Leistentrennung oder großflächige seitliche Schieber aufweist, um die Flanken der Kunststoffhülse beschädigungsfrei seitlich aus dem Werkzeug zu entformen.

Gemäß einem zweiten Aspekt betrifft die vorgestellte Erfindung eine Kunststoffhülse, wobei die Kunststoffhülse hergestellt ist durch eine mögliche Ausgestaltung des vorgestellten Verfahrens.

Aufgrund des vorgestellten Verfahrens weist die vorgestellte Kunststoffhülse eine Shorehärte von ca. 80 bis 85 Shore D für reines Polyamid bzw. 85 bis 90 Shore D für Polyamid mit Glasverstärkung auf. Entsprechend ist die Kunststoffhülse härter als eine KTL-Beschichtung mit einer Shorehärte von 50 bis 80 Shore D, die in der Regel in Aufnahmen zum Aufnehmen von Kunststoffhülsen verwendet wird. Daher ermöglicht die Abstufung der Härten von Kunststoffaußenhülse und KTL-Beschichtung, dass sich aufgrund des vorgestellten Verfahrens an einer äußeren Oberfläche der Kunststoffhülse ausgebildete Verkrallelemente in der KTL-Beschichtung verkrallen bzw. mit dieser verrasten oder verklemmen.

Es kann vorgesehen sein, dass die Kunststoffhülse an ihrer äußeren Oberfläche ein Oberflächenprofil aus einer Vielzahl von Verkrallelementen mit einer maximalen Flankenhöhe von maximal 0,5 mm, bevorzugt von maximal 70 µm, besonders bevorzugt von max. 30 µm aufweist.

Wenn jeweilige Verkrallelemente zu stark vorstehen, können diese durch das Einpressen in ein KTL-beschichtetes Element, wie bspw. ein Stahlauge, plastisch verformt werden, woraufhin sie ihre Verkrallfähigkeiten verlieren. Die Verkrallelemente sollten daher nicht wesentlich weiter vorstehen als die KTL-Beschichtung dick ist. Mit typischen KTL-Schichtstärken von 15 bis 35 µmergibt sich eine bevorzugte maximale Flankenhöhe in Höhe der doppelten KTL-Dicke von 70 µm, wobei sich eine Flankenhöhe von 30 µm als besonders robust erwiesen hat.

Es kann weiterhin vorgesehen sein, dass die Kunststoffhülse an ihrer äußeren Oberfläche eine Sägezahngeometrie ausbildet, wobei jeweilige Zähne der Sägezahngeometrie mit einem ersten Winkel in einer ersten Richtung und mit einem zweiten Winkel in einer zweiten Richtung ausgeformt sind, wobei der zweite Winkel größer ist als der erste Winkel.

Eine Sägezahngeometrie mit einem flachen Winkel in Einpressrichtung und einem Sperrwinkel entgegen der Einpressrichtung hat sich als besonders geeignet zum Verkrallen in einer KTL-Beschichtung erwiesen.

Es kann weiterhin vorgesehen sein, dass der zweite Winkel größer als 70°, bevorzugt 90° ist.

Eine Sägezahngeometrie bei der der zweite Winkel größer als 70°, bevorzugt 90° bedingt besonders formstabile und entsprechend robuste Sägezähne, sodass die entsprechende Kunststoffhülse besonders belastbar ist. Außerdem wirken besonders steile Zähne wie ein Widerhaken, was zu hohen Auspresskräften entgegen der Einpressrichtung führt.

Es kann weiterhin vorgesehen sein, dass die Kunststoffhülse an ihrer äußeren Oberfläche eine gleichmäßige Sägezahngeometrie ausbildet, wobei jeweilige Zähne der Sägezahngeometrie mit einem ersten Winkel in einer ersten Richtung und mit einem zweiten Winkel in einer zweiten Richtung ausgeformt sind, wobei der zweite Winkel gleich groß ist wie der erste Winkel.

Gleich große erste und zweite Winkel bedingen gleichmäßige Zahnflanken, was zu geringeren Auspresskräften führt als ein Sägezahnprofil mit unterschiedlichen ersten und zweiten Winkeln. Daher lässt sich ein entsprechendes Lager im Reparaturfall einfacher auspressen. Dieses ist insbesondere bei einem KTL-beschichteten Aufnahmeauge ohne signifikante Beschädigungen am KTL möglich. Würde das KTL nämlich beschädigt werden, so kann Korrosion das Aufnahmeauge beschädigen.

Es kann weiterhin vorgesehen sein, dass die Verkrallelemente, insbesondere die jeweiligen Zahnspitzen von Zähnen der Sägezahngeometrie, höchstens 5 mm, bevorzugt 1 mm, besonders bevorzugt 0,2 mm voneinander beabstandet sind, und/oder die Verkrallelemente, insbesondere die Sägezahngeometrie, auf mindestens 40 % einer zylindrischen Außenfläche der Kunststoffhülse, bevorzugt mindestens 70 % der Außenfläche, besonders bevorzugt mindestens 90 % der Außenfläche der Kunststoffhülse ausgestaltet ist, und/oder ein Verhältnis zwischen einem zylindrischen Gesamtsegment und einem Zahnsegment der Kunststoffhülse kleiner 0,4, bevorzugt kleiner 0,9 ist, und/oder die Kunststoffhülse aus einem Polyamid, bevorzugt einem glasfaserverstärkten Polyamid, geformt ist und eine gemittelte Rautiefe Rz von höchstens 70 µm aufweist.

Insbesondere kann die Kunststoffhülse aus PA 6, PA 66 oder einer Mischung aus PA 6 und PA 66 bestehen. Während PA 66 besonders bei typischen hohen Einsatztemperaturen von Elastomerlagern im Fahrwerk bis 90 °C noch Festigkeiten und Steifigkeiten aufweist, zeichnet sich PA6 durch besonders leichtes Fließen bei der Verarbeitung im Spritzguss auf. Eine Mischung aus PA66 mit geringen Anteilen von PA6 kombiniert dabei die guten Eigenschaften des PA66 bei hohen Temperaturen mit der guten Fließfähigkeit des PA6; hierdurch können im variothermen Prozess besonders gut die erfindungsgemäßen Verkrallelemente scharfkantig ausgebildet werden.

Es kann weiterhin vorgesehen sein, dass die Sägezahngeometrie mehrere spiralförmig ineinander übergehende Zähne umfasst.

Mehrere spiralförmig ineinander übergehende Zähne können einfach durch Ausdrehen des Werkzeuges hergestellt werden und bilden zusammen eine gewindeartige Struktur, die sich gut verkrallt und zu hohen Auspresskräften führt.

Gemäß einem dritten Aspekt betrifft die vorgestellte Erfindung ein Lagersystem.

Das vorgestellte Lagersystem umfasst eine mögliche Ausgestaltung der vorgestellten Kunststoffhülse und ein Aufnahmeelement, das eine Aufnahme ausbildet, wobei das Aufnahmeelement an einer inneren, die Aufnahme begrenzenden Oberfläche mit einer Kunststoffschicht, insbesondere mit einem KTL-Lack, beschichtet ist, und wobei die Kunststoffhülse in der Aufnahme angeordnet ist und mit der Anzahl Verkrallelemente in die Kunststoffschicht eingreift und, dadurch bedingt, die Kunststoffhülse in dem Aufnahmeelement verkrallt.

Aufgrund der erfindungsgemäßen Kunststoffhülse verkrallt diese besonders fest in dem Aufnahmeelement, sodass das Lagersystem besonders robust ist.

Insbesondere ermöglicht die vorgestellte Kunststoffhülse in dem vorgestellten Lagersystem das Einhalten enger Toleranzketten für das Eingreifen einer durch das Lagersystem ausgebildeten Rastkomponente in einen korrespondierenden Hinterschnitt, ohne dass an der Aufnahme mechanische Arbeiten für die Erstellung von Rastkomponenten notwendig sind, sodass eine robuste, sichere und kostengünstige Fixierung erreicht wird.

Es kann vorgesehen sein, dass eine Höhe der Verkrallelemente höchstens einer Dicke der KTL-Schicht entspricht.

Durch Verkrallelemente, deren Höhe höchstens einer Dicke der KTL-Schicht entspricht, wird ein Verformen der Verkrallelemente durch einen bspw. metallischen Grundkörper der Aufnahme vermieden.

Es kann vorgesehen sein, dass im Lagersystem die Shorehärte der Verkrallelemente der Kunststoffhülse höher als die Shorehärte der Kunststoffschicht des Aufnahmeelementes ist. Hierdurch wird gewährleistet, dass sich die Verkrallelemente in die Kunststoffschicht des Aufnahmeelementes, insbesondere in die KTL-Beschichtung des Aufnahmeelementes, eingraben bzw. verkrallen können, da die härteren Verkrallelemente die weiche Beschichtung plastisch verformen können.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine mögliche Ausgestaltung des vorgestellten Verfahrens,
- Fig. 2: eine erste mögliche Ausgestaltung der vorgestellten Kunststoffhülse,
- Fig. 3: eine zweite mögliche Ausgestaltung des vorgestellten Kunststoffhülse,
- Fig. 4: eine dritte mögliche Ausgestaltung der vorgestellten Kunststoffhülse,
- Fig. 5: eine vierte mögliche Ausgestaltung der vorgestellten Kunststoffhülse,
- Fig. 6: eine mögliche Ausgestaltung des vorgestellten Lagersystems.

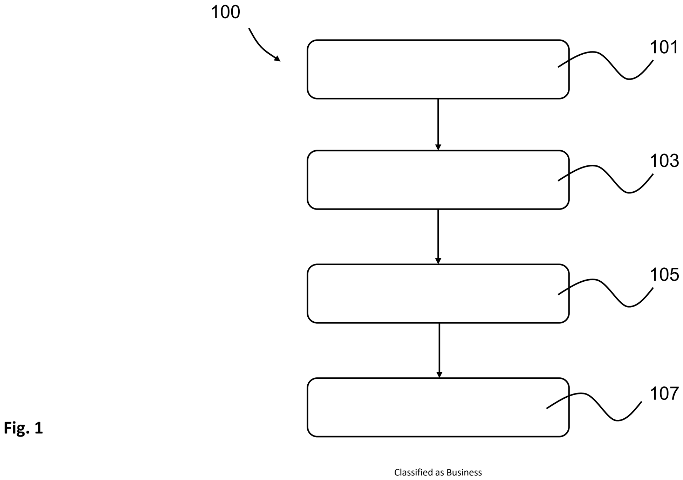

In Fig. 1 ist ein Verfahren 100 zur Herstellung einer Kunststoffhülse dargestellt.

Das Verfahren 100 umfasst einen Heizschritt 101, bei dem eine konturgebende Werkzeugoberfläche eines Spritzgusswerkzeugs auf eine vorgegebene Einspritztemperatur, mittels einer Temperiervorrichtung aktiv aufgewärmt wird.

Weiterhin umfasst das Verfahren 100 einen Einspritzungsschritt 103, bei dem Polymerschmelze in das Werkzeug eingespritzt wird, nachdem die konturgebende Oberfläche des Werkzeugs auf die Einspritztemperatur aufgeheizt wurde,

Weiterhin umfasst das Verfahren 100 einen Abkühlungsschritt 105, bei dem die konturgebende Werkzeugoberfläche auf eine vorgegebene Abkühltemperatur mittels einer Temperiervorrichtung aktiv abgekühlt wird, und einen Auswerfschritt 107, bei dem die formstabile Kunststoffhülse aus dem Werkzeug ausgeworfen wird, wobei durch das Werkzeug an einer äußeren Oberfläche der Kunststoffhülse ein Oberflächenprofil ausgeformt wird, das eine Anzahl Verkrallelemente mit einer maximalen Flankenhöhe von 0,5 mm aufweist.

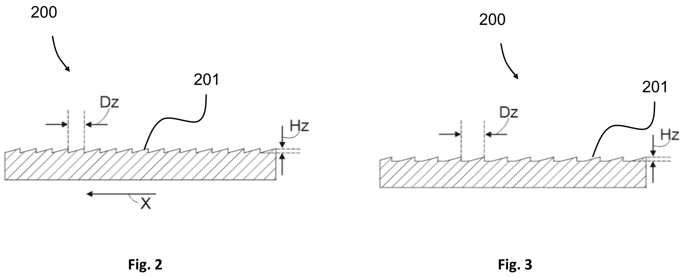

In Fig. 2 ist eine Kunststoffhülse 200 dargestellt, die an ihrer äußeren Oberfläche ein Oberflächenprofil aus einer Vielzahl von Verkrallelementen 201 mit einer maximalen Flankenhöhe Hz von maximal 0,5 mm, bevorzugt von maximal 70 µm, besonders bevorzugt von max. 30 µm aufweist.

Die Spitzen der Verkrallelemente 201 wiesen einen Abstand Dz von höchstens 5 mm auf,

In Fig. 3 ist die Kunststoffhülse 200 mit einem Oberflächenprofil aus einer Vielzahl von Verkrallelementen 201 dargestellt, die im Vergleich zu Fig. 1 in einem flacheren Winkel in Einpressrichtung, wie durch Pfeil x dargestellt, verlaufen und einen steilen Sperrwinkel entgegen der Einpressrichtung ausbilden.

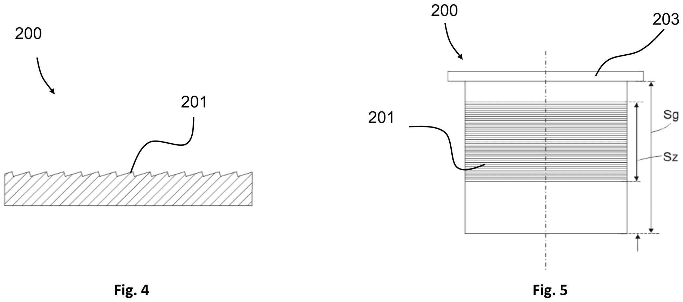

In Fig. 4 ist die Kunststoffhülse 200 mit einem Oberflächenprofil aus einer Vielzahl von Verkrallelementen 201 dargestellt, deren Zahnflanken einen Winkel von 90° aufweisen, sodass diese eine besonders hohe Auspresskraft bzw. Sperrwirkung bereitstellen.

In Fig. 4 ist die Kunststoffhülse 200 mit einem Oberflächenprofil aus einer Vielzahl von Verkrallelementen 201 dargestellt, deren Zahnflanken gleichmäßig verlaufen, sodass eine im Vergleich zu bspw. Fig. 4 geringere Auspresskraftkraft bereitgestellt wird, die Kunststoffhülse 200 jedoch bspw. zur Reparatur wieder beschädigungsfrei ausgepresst werden kann.

In Fig. 5 ist die die Kunststoffhülse 200 als zylindrisches Gesamtsegment (Sg) dargestellt, auf dem ein Oberflächenprofil (Sg) ausgebildet ist, das mindestens 15 Zahnspitzen in axialer Richtung versetzt zueinander ausbildet. Weiterhin bildet die Kunststoffhülse 200 hier einen Kragen 203 aus.

Ein Verhältnis einer Höhe des Gesamtsegment (Sg) zu dem Oberflächenprofil (Sg) sollte kleiner 0,9, insbesondere kleiner 0,4 sein.

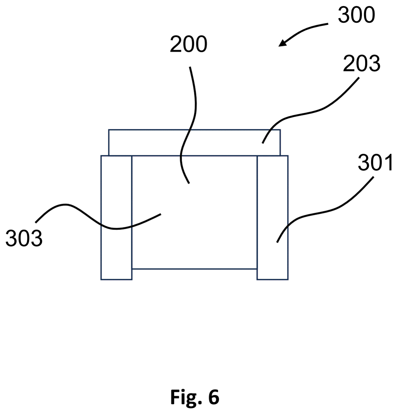

In Fig. 6 ist ein Lagersystem 300 dargestellt. Das Lagersystem 300 umfasst die Kunststoffhülse 200 bspw. gemäß Fig. 2 und ein Aufnahmeelement 301, das eine Aufnahme 303 ausbildet, wobei das Aufnahmeelement 301 an einer inneren, die Aufnahme 303 begrenzenden Oberfläche mit einer Kunststoffschicht, insbesondere mit einem KTL-Lack, beschichtet ist, und wobei die Kunststoffhülse 200 in der Aufnahme 303 angeordnet ist und mit der Anzahl Verkrallelemente 201 in die Kunststoffschicht eingreift und, dadurch bedingt, die Kunststoffhülse 200 in dem Aufnahmeelement 301 verkrallt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Verfahren
- 101: Heizschritt
- 103: Einspritzungsschritt
- 105: Abkühlungsschritt
- 107: Auswerfschritt
- 200: Kunststoffhülse
- 201: Verkrallelement
- 203: Kragen
- 300: Lagersystem
- 301: Aufnahmeelement
- 303: Aufnahme

## Patentansprüche

1. Verfahren (100) zur Herstellung einer Kunststoffhülse (200),
wobei das Verfahren (100) umfasst:
- Aktives Aufheizen (101) der konturgebenden Werkzeugoberfläche eines Spritzgusswerkzeugs auf eine vorgegebene Einspritztemperatur, mittels einer Temperiervorrichtung,
- Einspritzen (103) von Polymerschmelze in das Werkzeug, nachdem die konturgebende Oberfläche des Werkzeugs auf die Einspritztemperatur aufgeheizt wurde,
- Aktives Abkühlen (105) der konturgebenden Werkzeugoberfläche auf eine vorgegebene Abkühltemperatur mittels einer Temperiervorrichtung,
- Auswerfen (107) der formstabilen Kunststoffhülse (200) aus dem Werkzeug,
wobei durch das Werkzeug an einer äußeren Oberfläche der Kunststoffhülse (200) ein Oberflächenprofil ausgeformt wird, das eine Anzahl Verkrallelemente (201) mit einer maximalen Flankenhöhe von 0,5 mm aufweist.

2. Verfahren (100) nach Anspruch 1,
**dadurch gekennzeichnet,**
**dass** das Oberflächenprofil eine Vielzahl Verkrallelemente (201) mit einer maximalen Flankenhöhe von 70 µm, bevorzugt 30 µm aufweist.

3. Verfahren (100) nach einem der voranstehenden Ansprüche,
**dadurch gekennzeichnet,**
**dass** das Polymer aus der Gruppe der Polyamide besteht, wobei das Polyamid bevorzugt Glasfasern umfasst.

4. Verfahren (100) nach Anspruch einem der voranstehenden Ansprüche,
**dadurch gekennzeichnet,**
**dass** die Einspritztemperatur der konturgebenden Werkzeugoberfläche zwischen 120 °C und 200 °C, bevorzugt zwischen 140 °C und 160 °C liegt und/oder die Abkühltemperatur zwischen 40 °C und 100 °C, bevorzugt zwischen 60 °C und 80 °C liegt.

5. Verfahren (100) nach Anspruch einem der voranstehenden Ansprüche,
**dadurch gekennzeichnet,**
**dass** das Werkzeug eine äußere Leistentrennung oder großflächige seitliche Schieber aufweist, um die Flanken der Kunststoffhülse beschädigungsfrei seitlich aus dem Werkzeug zu entformen.

6. Kunststoffhülse (200),
wobei die Kunststoffhülse (200) hergestellt ist durch ein Verfahren (100) nach einem der Ansprüche 1 bis 5.

7. Kunststoffhülse (200) nach Anspruch 6,
**dadurch gekennzeichnet,**
**dass** die Kunststoffhülse (200) an ihrer äußeren Oberfläche ein Oberflächenprofil aus einer Vielzahl von Verkrallelementen (201) mit einer maximalen Flankenhöhe von maximal 0,5 mm, bevorzugt von maximal 70 µm, besonders bevorzugt von max. 30 µm aufweist.

8. Kunststoffhülse (200) nach Anspruch 7,
**dadurch gekennzeichnet,**
**dass** die Kunststoffhülse (200) an ihrer äußeren Oberfläche eine Sägezahngeometrie ausbildet,
wobei jeweilige Zähne der Sägezahngeometrie mit einem ersten Winkel in einer ersten Richtung und mit einem zweiten Winkel in einer zweiten Richtung ausgeformt sind, wobei der zweite Winkel größer ist als der erste Winkel.

9. Kunststoffhülse (200) nach Anspruch 8,
**dadurch gekennzeichnet, dass** der zweite Winkel größer als 70°, bevorzugt 90° ist.

10. Kunststoffhülse (200) nach Anspruch 9,
**dadurch gekennzeichnet,**
**dass** die Kunststoffhülse (200) an ihrer äußeren Oberfläche eine gleichmäßige Sägezahngeometrie ausbildet,
wobei jeweilige Zähne der Sägezahngeometrie mit einem ersten Winkel in einer ersten Richtung und mit einem zweiten Winkel in einer zweiten Richtung ausgeformt sind, wobei der zweite Winkel gleich groß ist wie der erste Winkel.

11. Kunststoffhülse (200) nach einem der Ansprüche 8 bis 10,
**dadurch gekennzeichnet,**
**dass** die Verkrallelemente (201), insbesondere die jeweiligen Zahnspitzen von Zähnen der Sägezahngeometrie, höchstens 5 mm, bevorzugt 1 mm, besonders bevorzugt 0,2 mm voneinander beabstandet sind, und/oder
die Verkrallelemente (201), insbesondere die Sägezahngeometrie auf mindestens 40 % einer zylindrischen Außenfläche der Kunststoffhülse, bevorzugt mindestens 70 % der Außenfläche, besonders bevorzugt mindestens 90 % der Außenfläche der Kunststoffhülse ausgestaltet ist, und/oder
ein Verhältnis zwischen einem zylindrischen Gesamtsegment und einem Zahnsegment der Kunststoffhülse kleiner 0,4, bevorzugt kleiner 0,9 ist, und/oder die Kunststoffhülse aus einem Polyamid, bevorzugt einem glasfaserverstärkten Polyamid, geformt ist und eine gemittelte Rautiefe Rz von höchstens 70 µm aufweist.

12. Kunststoffhülse (200) nach einem der Ansprüche 8 bis 11,
**dadurch gekennzeichnet,**
**dass** die Sägezahngeometrie mehrere spiralförmig ineinander übergehende Zähne umfasst.

13. Lagersystem (300),
wobei das Lagersystem (300) umfasst:
- eine Kunststoffhülse (200) nach einem der Ansprüche 6 bis 12,
- ein Aufnahmeelement (301), das eine Aufnahme (303) ausbildet,
wobei das Aufnahmeelement (301) an einer inneren, die Aufnahme (303) begrenzenden Oberfläche mit einer Kunststoffschicht, insbesondere mit einem KTL-Lack, beschichtet ist,
wobei die Kunststoffhülse (200) in der Aufnahme (303) angeordnet ist und mit der Anzahl Verkrallelemente (201) in die Kunststoffschicht eingreift und, dadurch bedingt, die Kunststoffhülse (200) in dem Aufnahmeelement (301) verrastet.

14. Lagersystem (300) nach Anspruch 13,
**dadurch gekennzeichnet,**
**dass** eine Höhe der Verkrallelemente (201) höchstens einer Dicke der KTL-Schicht entspricht.

15. Lagersystem (300) nach Anspruch 13 oder 14,
**dadurch gekennzeichnet,**
**dass** die Shorehärte der Verkrallelemente (201) der Kunststoffhülse (200) höher als die Shorehärte der Kunststoffschicht des Aufnahmeelementes 301, insbesondere höher als die Shorehärte der KTL-Beschichtung des Aufnahmeelementes 301, ist.
